# EUROPÄISCHE PATENTSCHRIFT

(11) **EP 2 947 962 B1**
(45) Veröffentlichungstag und Bekanntmachung des Hinweises auf die Patenterteilung: **20.07.2022**
(21) Anmeldenummer: 15163719.6
(22) Anmeldetag: 15.04.2015
(51) Int. Cl.: H05B 45/14

(54) **KRAFTFAHRZEUGBELEUCHTUNGSSYSTEM**
MOTOR VEHICLE ILLUMINATION SYSTEM
SYSTÈME D'ÉCLAIRAGE DE VÉHICULE AUTOMOBILE

(30) Priorität: 15.04.2014 DE 102014207165
(43) Veröffentlichungstag der Anmeldung: 25.11.2015
(73) Patentinhaber: Automotive Lighting Reutlingen GmbH, 72762 Reutlingen (DE)
(72) Erfinder: Blum, Dirk, 72076 Tübingen (DE); Bormann, Uwe, 89520 Heidenheim (DE); Jedek, Andreas, 72793 Pfullingen (DE)
(74) Vertreter: DREISS Patentanwälte PartG mbB

(56) Entgegenhaltungen:
- DE-A1-102005 018 175
- DE-A1-102008 006 799
- DE-A1-102008 023 338
- DE-A1-102008 039 530
- DE-A1-102010 048 661
- DE-A1-102011 053 190
- DE-A1-102011 055 594
- DE-A1-102011 083 025

## Beschreibung

Die Erfindung betrifft ein Kraftfahrzeugbeleuchtungssystem nach dem Oberbegriff des Anspruchs 1.

Solche Beleuchtungssysteme sind bekannt und weisen Elemente zur Lichterzeugung und ein Steuergerät auf, wobei die Elemente zur Lichterzeugung eine Halbleiterlichtquelle aufweisen, die auf einem Trägerelement angeordnet ist, und wobei das Steuergerät dazu eingerichtet ist, einen Betriebsstrom der mindestens einen Halbleiterlichtquelle einzustellen, wobei die Elemente zur Lichterzeugung eine Auswerteschaltung aufweisen, die auf dem Trägerelement angeordnet und dazu eingerichtet ist, eine Klasse der Halbleiterlichtquelle und eine Temperatur zu erfassen, wobei die Auswerteschaltung dazu eingerichtet ist, in Abhängigkeit von der erfassten Temperatur in der unmittelbaren Umgebung der Halbleiterlichtquelle ein Ausgangssignal zu erzeugen, das die erfasste Klasse und die erfasste Temperatur abbildet. Unter einer Halbleiterlichtquelle wird hier eine einzelne Leuchtdiode oder Laserdiode oder jeweils eine Gruppe solcher Dioden verstanden, die vom Steuergerät mit dem genannten Betriebsstrom gemeinsam betrieben werden. Aus der DE 10 2011 083 025 A1 ist eine Erfassung der Temperatur von Halbleiterlichtquellen und eine Berücksichtigung der Temperatur bei der Ansteuerung der Halbleiterlichtquellen bekannt. Aus der DE 10 2010 048 661 A1 ist eine RFID Kommunikation zwischen einem Speicherelement und einer Steuer- und/oder Regeleinrichtung einer Halbleiterlichtquelle einer Beleuchtungseinrichtung für ein Kraftfahrzeug bekannt. In dem Speicherelement ist eine Information über eine Klasse der Halbleiterlichtquelle abgelegt. Die Information kann durch eine Temperaturinformation ergänzt werden. Der Inhalt des Speicherelements kann durch RFID Kommunikation übertragen werden.

Üblicherweise ist das Trägerelement noch mit anderen elektrischen Bauteilen bestückt, die eine Energieversorgung der Halbleiterlichtquellen und/oder deren Steuerung ermöglichen.

Im Betrieb einer Halbleiterlichtquelle wird in deren Halbleiterchip elektrische Verlustwärme frei und heizt den Chip auf. Die Temperatur einer Halbleiterlichtquelle hat großen Einfluss auf deren Lichtausbeute und Lebensdauer und muss durch Kühlung begrenzt werden, um eine Selbstzerstörung des Chips durch Überhitzung zu vermeiden. Der Chip darf eine Maximaltemperatur nicht überschreiten, die nicht viel höher als etwa 100° C ist. Die Verlustwärme kann nicht ausreichend durch Strahlung abgeführt werden und wird bevorzugt über das Trägerelement und einen Kühlkörper an die Umgebung abgeführt. Das gilt vor allem für Halbleiterlichtquellen, die mit hohem Betriebsstrom arbeiten.

Eine Halbleiterlichtquelle besitzt in der Regel eine exponentielle Abhängigkeit des Stromflusses von der anliegenden Spannung. Die resultierende Strom-Spannungs-Kennlinie hängt auch von der Temperatur der Halbleiterlichtquelle ab. Kleine Schwankungen in der Spannung verursachen große Stromänderungen und damit verbunden auch große Änderungen der lichttechnischen Eigenschaften wie Lichtstrom (Helligkeit) und Farbtemperatur. Um die Schwankungen gering zu halten, werden Halbleiterlichtquellen in der Regel mit fest eingestelltem Strom betrieben, beispielsweise über eine Konstantstromquelle. Alternativ dazu werden sie zumindest über einen Stromschwankungen dämpfenden Vorwiderstand betrieben. Es ist üblich, dass für Halbleiterlichtquellen ein Nennstrom angeben ist, bei dem die Halbleiterlichtquellen eine hohe Lichtausbeute bei kleiner Leistungsaufnahme und damit eine hohe Effizienz aufweisen. Dieser Nennstrom wird unter Laborbedingungen ermittelt. Die dabei herrschenden Temperaturbedingungen sind im realen Betrieb der Halbleiterlichtquellen in Kraftfahrzeugen nicht immer einzuhalten.

Bei der industriellen Produktion von Halbleiterlichtquellen kommt es zwischen Chips aus unterschiedlichen Fertigungschargen zu Abweichungen zwischen deren Eigenschaften. Dabei variieren zum Beispiel die lichttechnischen Eigenschaften der Halbleiterlichtquellen, wie deren Lichtfarbe und Leuchtkraft. Damit eine konstante Lichtqualität mit gleichem Helligkeitsniveau und einheitlicher Lichtfarbe gewährleistet ist, werden die Halbleiterlichtquellen in Klassen oder sogenannte "Bins" sortiert. Auswahlkriterien für die Zuordnung in eine Klasse sind unter anderem der Lichtstrom bei Nennstrom und die Farbtemperatur.

Damit das Steuergerät in der Lage ist, den Betriebsstrom für einen Betrieb der Halbleiterlichtquelle korrekt einzustellen, muss das Steuergerät Informationen über die Klasse der Halbleiterlichtquelle sowie über die Temperatur der Halbleiterlichtquelle oder, als Maß für die Temperatur im Halbleiterchip, über die Temperatur der unmittelbaren Umgebung der Halbleiterlichtquelle erhalten.

In diesem Zusammenhang ist es bekannt, auf dem Trägerelement einen temperaturabhängigen Widerstand und einen Kodierwiderstand anzuordnen. Die Größe des Kodierwiderstandes korrespondiert mit der Klasse der Halbleiterlichtquelle. Für eine Abfrage dieser Widerstände werden zusätzlich zu den Leitungen für die Energieversorgung der Halbleiterlichtquelle drei Leitungen benötigt, nämlich je eine Signalleitung zum Widerstand und eine für beide Widerstände gemeinsame Masseleitung. Grundsätzlich gilt, dass die Wahrscheinlichkeit für Fehlmessungen mit zunehmender Leitungszahl zunimmt, weil mit zunehmender Leitungszahl auch die Zahl möglicher Leitungsdefekte ansteigt. Die Wahrscheinlichkeit für Fehlmessungen wird auch dadurch erhöht, dass die zum Ermitteln der Widerstandswerte verwendeten Stromstärken sehr klein sind und oft unterhalb eines Mindeststromwerts liegen, der für eine zwischen Trägerelement und Steuergerät angeordnete Steckverbindung spezifiziert ist. Durch Streuungen des Übergangswiderstandes der Steckverbindung kommt es insbesondere bei einem durch Alterung der Steckverbindung erhöhten Übergangswiderstand zu Fehlmessungen.

Vor diesem Hintergrund liegt die Aufgabe der Erfindung in der Angabe eines Kraftfahrzeugbeleuchtungssystems, das eine Steuerung der Halbleiterlichtquelle mit einem in Bezug auf deren Bin und deren Temperatur korrekten Betriebsstrom mit einer verringerten Anzahl von Leitungen zwischen dem Steuergerät und den Elementen zur Lichterzeugung ermöglicht.

Diese Aufgabe wird durch ein Kraftfahrzeugbeleuchtungssystem mit den Merkmalen des Anspruchs 1 gelöst.

Die Erfindung zeichnet sich dadurch aus, dass jedem Wertepaar aus erfasster Klasse und erfasster Temperatur genau ein Wert des Ausgangssignals ein-eindeutig zugeordnet ist, dass die Auswerteschaltung dazu eingerichtet ist, dieses Ausgangssignal an einem Ausgang der Auswerteschaltung bereitzustellen, der mit einem Eingang des Steuergeräts über eine Leitung verbunden ist, und dass das Steuergerät dazu eingerichtet ist, durch einen Zugriff auf im Steuergerät hinterlegte Zusammenhänge aus dem übermittelten Ausgangssignal die Klasse und die Temperatur zu ermitteln und zu dem Wert des Ausgangssignals einen für die ermittelte Klasse und die ermittelte Temperatur passenden Sollwert des Betriebsstroms zu bestimmen und den Istwert des Betriebsstromes basierend auf dem Sollwert einzustellen.

Das Ausgangssignal ist beispielsweise ein elektrischer Strom oder eine elektrische Spannung, die an das Steuergerät übertragen wird. Zur Übertragung dieses Ausgangssignals, das die Klasse und/oder die Temperatur ein-eindeutig abbildet, genügt eine Leitung. In dem erfindungsgemäßen Kraftfahrzeugbeleuchtungssystem ist die Anzahl der Leitungen, die pro Halbleiterlichtquelle oder pro gemeinsam betriebener Gruppe von Halbleiterlichtquellen erforderlich sind, um dem Steuergerät eine Kenntnis über die Temperatur der Halbleiterlichtquelle und deren fertigungsbedingte Klassifizierung zu verschaffen von drei auf eins reduziert.

Mit der Anzahl der Verbindungen zwischen Steuergerät und Trägerelement sinkt die Wahrscheinlichkeit für Übertragungsfehler, so dass das Beleuchtungssystem zuverlässiger betreibbar ist. Außerdem ist das Beleuchtungssystem wegen der verringerten Zahl an Leitungen kostengünstiger herstellbar.

Eine bevorzugte Ausgestaltung sieht vor, dass die Auswerteschaltung mit einem elektrischen Widerstand bestückt ist, der die Klasse der Halbleiterlichtquelle repräsentiert. Ein Austausch der Halbleiterlichtquelle erfolgt in der Regel gemeinsam mit dem Trägerelement auf dem sie angeordnet ist. Damit wird bei einem Austausch der Halbleiterlichtquelle auch die Auswerteschaltung getauscht. Dadurch kann bei der Herstellung des bestückten Trägerelementes sichergestellt werden, dass sich die an das Steuergerät zu übermittelnden Eigenschaften korrekt in dem von der Auswertschaltung erzeugten Ausgangssignal abbilden. Eine weitere bevorzugte Ausgestaltung sieht vor, dass die Auswerteschaltung parallel zu der mindestens einen Halbleiterlichtquelle über eine Energieversorgung der Lichtquelle mit elektrischer Energie versorgt wird. Dadurch werden Lichtquelle und Auswerteschaltung immer zeitgleich betrieben, so dass bei eingeschalteter Lichtquelle jederzeit die für den korrekten Betrieb der Halbleiterlichtquelle maßgeblichen Parameter an das Steuergerät übermittelt werden können. Bei ausgeschalteter Lichtquelle ist die Auswerteschaltung ebenfalls ausgeschaltet.

Weiterhin ist bevorzugt, dass die Halbleiterlichtquelle mehrere in Reihe geschaltete Einzel-Halbleiterlichtquellen aufweist. Durch jede der Einzel-Halbleiterlichtquellen fließt bei eingeschalteter Lichtquelle derselbe Strom. In dieser Schaltung ist für alle Einzel-Halbleiterlichtquellen nur eine Auswerteschaltung erforderlich. In diesem Zusammenhang ist es besonders bevorzugt, dass alle in Reihe geschalteten Einzel-Halbleiterlichtquellen denselben Nennstrom aufweisen. Bei parallel geschalteten Halbleiterlichtquellen ist für jede Halbleiterlichtquelle eine eigene Auswerteschaltung vorgesehen, da das Steuergerät den korrekten Betriebsstrom für jede Halbleiterlichtquelle separat einstellen muss. Hierbei können auch Halbleiterlichtquellen parallelgeschaltet werden, die unterschiedliche Nennströme aufweisen.

Denkbar ist es auch, mehrere Reihenschaltungen von Halbleiterlichtquellen parallel miteinander zu verschalten. Hierbei ist für jede Reihenschaltung eine separate Auswerteschaltung vorzusehen, da für jede der mehreren Reihenschaltungen ein Betriebsstrom eingestellt werden muss.

Eine weitere Ausgestaltung sieht vor, dass die Auswerteschaltung bei gedimmter Lichtquelle betreibbar ist. Halbleiterlichtquellen werden in der Regel mittels Pulsweitenmodulation gedimmt. Dabei wird mit konstanter Frequenz der Strom zwischen zwei Werten, meist zwischen dem Wert 0 und dem Wert des Nennstroms, hin und her geschaltet. Durch das Verhältnis von Einschaltdauer zu Periodendauer wird die mittlere Helligkeit der Lichtquelle beeinflusst. Die Frequenz ist so hoch gewählt (z.B. mehr als 100 Hz), dass der menschliche Sehsinn dem entsprechend schnellen Hell-Dunkel-Wechsel zwischen eingeschalteter Lichtquelle und ausgeschalteter Lichtquelle nicht folgen kann und stattdessen nur eine mittlere Helligkeit wahrnimmt. Während die Lichtquelle angeschaltet ist, werden die Informationen bezüglich Klasse und Temperatur an das Steuergerät übermittelt, so dass nach wenigen Perioden das Steuergerät den optimalen Betriebsstrom eingestellt hat.

Bevorzugt ist auch, dass die Auswerteschaltung dazu eingerichtet ist, ein digitales Ausgangssignal zu erzeugen.

Ein analoges Ausgangssignal, wie beispielsweise eine elektrische Spannung oder ein elektrischer Strom, dessen Höhe von der Klasse der Halbleiterlichtquelle und/oder der Temperatur in der unmittelbaren Umgebung der Halbleiterlichtquelle abhängig ist, ist bei der Übermittlung an das Steuergerät anfällig für Störungen. So kann beispielsweise eine korrodierte Steckverbindung die Höhe des Ausgangssignals beeinflussen. Demgegenüber wird ein digitales Ausgangsignal nahezu störungsfrei an das Steuergerät übermittelt.

Weiterhin ist bevorzugt, dass das Steuergerät dazu eingerichtet ist, Startparameter für den Betriebsstrom zu speichern, mit denen die Halbleiterlichtquelle in Betrieb genommen werden kann. Im Steuergerät werden in Grenzen frei wählbare Informationen zu den Halbleiterlichtquellen, beispielsweise Nennstrom oder Durchbruchspannung, hinterlegt, die eine erste Inbetriebnahme der Halbleiterlichtquelle zulassen. Die Halbleiterlichtquellen werden dabei zunächst einmalig und kurzzeitig mit einem in der Regel noch nicht korrekten Betriebsstrom betrieben, bis die Auswerteschaltung die kodierten Werte erfasst und an das Steuergerät übermittelt hat. Auf diese Weise ist es möglich, die Halbleiterlichtquellen auszutauschen ohne in die Programmierung des Steuergerätes einzugreifen oder das Steuergerät austauschen zu müssen.

Ergänzend wird vorgeschlagen, dass das Steuergerät dazu eingerichtet ist, die Startparameter zu überschreiben. Sind die kodierten Werte ermittelt, auf deren Basis die Halbleiterlichtquelle optimal betrieben werden kann, werden diese im Steuergerät hinterlegt, so dass diese bei erneutem Einschalten der Halbleiterlichtquelle sofort zur Verfügung stehen und das Steuergerät den optimalen Betriebsstrom schnell einstellt. Dies gilt natürlich nur für die Klasse (Bin) und nicht für die Temperatur.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
Figur 1 ein Ausführungsbeispiel eines erfindungsgemäßen Kraftfahrzeugbeleuchtungssystems;
Figur 2 eine Ausgestaltung einer Merkmale der Erfindung aufweisenden Auswerteschaltung; und
Figur 3 verschiedene Ausgangssignale einer Merkmale der Erfindung aufweisenden Auswerteschaltung in Abhängigkeit von Temperatur und Klasse (Bin) der angeschlossenen Halbleiterlichtquelle.

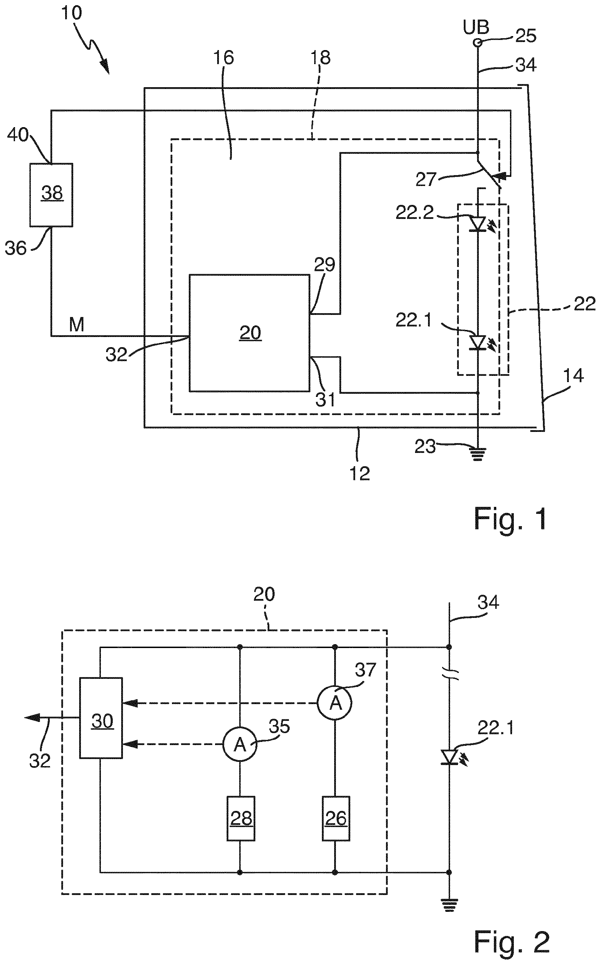

Die Figur 1 zeigt ein Kraftfahrzeugbeleuchtungssystem 10. In einem Gehäuse 12, dessen Lichtaustrittsöffnung mit einer transparenten Scheibe 14 abgedeckt ist, sind Elemente 18 angeordnet, die der Lichterzeugung dienen. Ein Trägerelement 16 liegt in der Zeichnungsebene. Das Trägerelement ist zum Beispiel eine Leiterplatte. Auf dem Trägerelement 16 sind eine Auswerteschaltung 20 und mindestens eine Halbleiterlichtquelle 22 angeordnet. Optische Elemente wie Reflektoren und/oder Linsen, die das Licht der Lichtquelle bündeln und daraus eine regelkonforme Lichtverteilung erzeugen, sind aus Gründen der Übersichtlichkeit nicht dargestellt.

Figur 1 zeigt eine Ausgestaltung mit einer Halbleiterlichtquelle, ohne dass die Erfindung in irgendeiner Weise auf eine bestimmte Zahl von Halbleiterlichtquellen festgelegt ist. Die Halbleiterlichtquelle 22 besteht hier aus einer Gruppe von zwei in Reihe liegenden Leuchtdioden oder Laserdioden 22.1, 22.1, die gemeinsam betrieben werden. Die beiden Leuchtdioden oder Laserdioden 22.1, 22.1 werden insbesondere mit demselben Betriebsstrom betrieben. Die Halbleiterlichtquelle liegt zwischen einem Masseanschluss 23 und einem Pluspol 25 einer elektrischen Energieversorgung, zum Beispiel eines Bordnetzes, in dem eine Spannung UB oder eine daraus erzeugte höhere oder niedrigere Spannung herrscht. Der Stromfluss durch die Halbleiterlichtquelle wird durch einen Schalter 27 gesteuert, der den Stromfluss entweder sperrt oder freigibt oder dessen Höhe steuert und der in der dargestellten Ausgestaltung mit der Halbleiterlichtquelle in Reihe in einem Energieversorgungszweig 34 geschaltet ist.

Ein erster Anschluss 29 der Auswerteschaltung ist mit dem Pluspol 25 des Bordnetzes verbunden und ein zweiter Anschluss 31 der Auswerteschaltung ist mit der Masse 23 des Bordnetzes verbunden. Die Auswerteschaltung 20 ist in der dargestellten Ausgestaltung an den Energieversorgungszweig der Halbleiterlichtquelle 22 angeschlossen. Dies ist nicht zwingend erforderlich, spart aber separate Leitungspfade ein. Prinzipiell kann die Auswerteschaltung in einer alternativen Ausgestaltung auch separat von der Halbleiterlichtquelle 22 mit elektrischer Energie versorgt werden.

Die Auswerteschaltung 20 ist dazu angeordnet und dazu eingerichtet, eine Klasse der Halbleiterlichtquelle 22 und ein Maß für deren Temperatur zu erfassen und in Abhängigkeit von der erfassten Klasse und Temperatur ein Ausgangssignal M zu erzeugen, das die erfasste Klasse und Temperatur ein-eindeutig abbildet. Die Auswerteschaltung stellt dieses Ausgangssignal an einem Ausgang 32 der Auswerteschaltung bereit, der mit einem Eingang 36 des Steuergeräts 38 verbunden ist, so dass das Steuergerät das Ausgangssignal M empfängt. Das Steuergerät ist dazu eingerichtet, den Betriebsstrom für die Elemente (18) zur Lichterzeugung in Abhängigkeit von dem Ausgangssignal M einzustellen. In der dargestellten Ausgestaltung geschieht die Einstellung des Betriebsstroms durch eine Betätigung des Schalters 27, der zum Beispiel ein Transistor ist. Die Steuerung kann, je nach Ausgestaltung, sowohl durch eine Einstellung eines im Betrieb stetig fließenden Stroms als auch durch schnelles Ein- und Ausschalten eines höheren Stroms erfolgen, so dass sich ein mittlerer Stromfluss einstellt, der eine mittlere Helligkeit erzeugt.

Das Trägerelement 16 steht meist in thermischen Kontakt mit einem Kühlelement. Das Kühlelement ist hier hinter dem Trägerelement 16 und damit unterhalb der Zeichnungsebene angeordnet. Bei einem Betrieb der Lichtquelle 18 nimmt das Kühlelement die in der Halbleiterlichtquelle 22 entstehende Wärme auf und gibt sie an die Umgebung ab. Halbleiterlichtquellen werden in verschiedene fein abgestufte Klassen eingeteilt. Für Halbleiterlichtquellen, die weißes Licht abgeben, umfasst die Klasse im Wesentlichen die Schwellenspannung, die Lichtausbeute sowie die Farbtemperatur der LED bei einem Betrieb mit elektrischem Nennstrom.

Eine Ausgestaltung der Auswerteschaltung 20 ist schematisch in der Figur 2 dargestellt. Die Auswerteschaltung 20 ist dazu eingerichtet und angeordnet, die Temperatur in der unmittelbaren Umgebung der LED 22 zu messen. Diese Temperatur dient als Maß für die Temperatur im Halbleiter der Halbleiterlichtquelle 22. In der Regel wird dafür ein elektrischer Widerstand 26 eingesetzt, dessen Widerstandswert temperaturabhängig ist und dessen Temperatur aufgrund einer thermischen Kopplung dieses Widerstandes mit der Halbleiterlichtquelle ein Maß für die Temperatur der Halbleiterlichtquelle ist. Weiterhin enthält die Auswerteschaltung 20 einen sogenannten Kodierwiderstand 28. Der Kodierwiderstand 28 ist ein elektrischer Festwiderstand, dessen Widerstandswert die Klasse der Halbleiterlichtquelle 22 repräsentiert. Jeder Klasse ist ein Widerstandswert ein-eindeutig zugeordnet. Die Widerstandswerte der Widerstände 26 und 28 werden bevorzugt durch Messungen der Ströme durch diese Widerstände oder durch Messungen der Spannungsabfälle an diesen Widerständen gemessen. Fig. 2 zeigt die Ausgestaltung mit Strommessungen durch Amperemeter 35 und 37, wobei je eines der Amperemeter in Reihe mit einem der Widerstände an einer festen Spannung, zum Beispiel an der Bordnetzspannung oder einer daraus erzeugten kleineren oder größeren Spannung liegen. Weiterhin weist die Auswerteschaltung 20 eine Signalquelle 30 auf. Diese Signalquelle 30 erzeugt in Abhängigkeit von den Messwerten für den temperaturabhängigen Widerstand 26 und den Kodierwiderstand 28 ein Ausgangssignal M. Das Ausgangssignal M ist beispielsweise ein analoges Signal, beispielsweise ein elektrischer Strom oder eine elektrische Spannung oder besonders bevorzugt ein digitales Signal. Das Ausgangsignal verlässt die Auswerteschaltung 20 über einen Ausgangskontakt 32.

In der Figur 1 ist die Auswerteschaltung 20 parallel zu der Halbleiterlichtquelle 22 an deren Leistungsversorgung 34 angeschlossen. Sind mehrere Halbleiterlichtquellen 22 in Reihe geschaltet, so wird die Auswerteschaltung 20 parallel zu allen in Reihe geschalteten Halbleiterlichtquellen 22 an die Leistungsversorgung 34 angeschlossen. Dadurch, dass der Schalter 27 zwischen der Halbleiterlichtquelle und der Auswerteschaltung liegt, können die Widerstandswerte sowohl bei eingeschalteter Halbleiterlichtquelle als auch bei ausgeschalteter Halbleiterlichtquelle ermittelt werden. Die letztere Alternative ist bevorzugt, weil sie eine von Einflüssen der Halbleiterlichtquelle unabhängige Erfassung der Werte der Widerstände 26, 28 erlaubt.

Der Ausgangskontakt 32 der Auswerteschaltung 20 ist mit einem Eingang 36 eines Steuergerätes 38 verbunden. Das Steuergerät 38 ist in der Regel nicht auf dem Trägerelement 16 oder im Gehäuse 12 angeordnet, sondern ist beispielsweise Teil einer Fahrzeugsteuerung, die an einem frei wählbaren Ort im Fahrzeug angeordnet ist. Das Steuergerät und die Auswerteschaltung sind lediglich über die eine, das Ausgangssignal M der Auswerteschaltung übertragende Leitung 37 verbunden. Ein Ausgang 40 des Steuergeräts 38 ist mit der Leistungsversorgung 34 elektrisch verbunden.

Die Funktionsweise des Kraftfahrzeugbeleuchtungssystem 10 ist folgender Maßen: Beim Betrieb des Kraftfahrzeugbeleuchtungssystem 10 fließt elektrischer Strom durch den Leistungsversorgungszweig 34 und versorgt die Halbleiterlichtquellen 22 und die Auswerteschaltung 20 mit elektrischer Energie. Dieser elektrische Strom wird von dem Steuergerät 38 bereitgestellt und/oder eingestellt. Die Auswerteschaltung 20 misst die Temperatur und den Widerstandswert des Kodierwiderstands. Aus diesen Informationen erzeugt die Auswerteschaltung 20 das Ausgangssignal M, dessen Wert abhängig von diesen beiden Informationen ist. Dabei ist jedem Wertepaar aus Diodenklasse und Temperatur genau ein Wert des Ausgangssignals M ein-eindeutig zugeordnet.

Das Ausgangssignal wird an das Steuergerät 38 übermittelt. Das Steuergerät 38 ist dazu eingerichtet, diese Informationen über Diodenklasse und Temperatur, die in Form eines Ausgangssignals M übermittelt werden, auszuwerten und den Betriebsstrom, der über die Leistungsversorgung 34 fließt und mit dem die Halbleiterlichtquelle 22 und die Auswerteschaltung 20 betrieben wird, entsprechend einzustellen. Im Steuergerät sind Daten in Form von Kennlinien, Kennfeldern und/oder Berechnungsvorschriften abgelegt, die es dem Steuergerät erlauben, zu jedem Wert des Signal M einen für die zugehörige Diodenklasse und Temperatur passenden Betriebsstrom zu bestimmen und einzustellen. Das Steuergerät ist insbesondere dazu eingerichtet, zu jedem Wert des Signal M einen für die zugehörige Diodenklasse und Temperatur passenden Sollwert des Betriebsstrom zu bestimmen und den Istwert dem Sollwert entsprechend einzustellen.

Die Auswerteschaltung 20 arbeitet auch bei gedimmt betriebener Halbleiterlichtquelle 22. Die Dimmung einer Halbleiterlichtquelle erfolgt in der Regel mittels Pulsweitenmodulation (PWM). Dabei wechselt der Strom, mit dem die Halbleiterlichtquelle 22 betrieben wird, mit konstanter Frequenz zwischen zwei Werten, meist zwischen dem Wert Null und einem Nennstromwert. Diese Steuerung erfolgt über ein Öffnen und Schließen des Schalters 27. Über das Verhältnis der Impulsdauer zur Periodendauer, also über die Einschaltdauer innerhalb eines Ein-Aus-Zyklus, wird die Helligkeit der Halbleiterlichtquelle 22 eingestellt. Es werden einige wenige Impulse benötigt, bis das Steuergerät 38 die von der Auswerteschaltung 20 übermittelten Informationen ausgewertet hat. Die Ermittlung der Widerstandswerte erfolgt bevorzugt bei ausgeschalteter Halbleiterlichtquelle, weil die Ermittlung dann nicht durch deren elektrische Eigenschaften beeinflusst wird.

Beim Gegenstand der Figur 2 ist die Auswerteschaltung an denselben Energieversorgungszweig angeschlossen wie die der Auswerteschaltung zugehörige Halbleiterlichtquelle, wobei der Energieversorgungszweig den zur Steuerung des Stroms durch die Halbleiterlichtquelle dienenden Schalter aufweist, der zwischen einem Anschluss der Halbleiterlichtquelle und einem Anschluss der Auswerteschaltung liegt, so dass die Auswerteschhaltung auch bei ausgeschalteter Halbleiterlichtquelle über den Zweig mit elektrischer Energie versorgbar ist. Für diese Funktion könnte der Schalter 27 auch zwischen dem näher bei Masse 23 als beim Pluspol 25 liegenden Anschluss der Auswerteschaltung an den Zweig 34 und dem näher an Masse 23 als beim Pluspol 25 liegenden Anschluss der Halbleiterlichtquelle an den Zweig 34 liegen.

Es ist denkbar, Startparameter, die zur Energieversorgung der Halbleiterlichtquelle 22 erforderlich sind, im Steuergerät 38 zu hinterlegen. Mit diesen vorab hinterlegten Parametern wird die Halbleiterlichtquelle in Betrieb genommen. Bei der Inbetriebnahme werden von der Auswerteschaltung 20 die realen Werte von Temperatur und Diodenklasse ermittelt und als Ausgangs M kodiert an das Steuergerät 38 übertragen. Das Steuergerät 38 ist dazu eingerichtet, die Startparametern dann bei Bedarf durch besser angepasste Werte zu überschreiben. Dadurch wird bei einem Austausch der Elemente 18, die eine oder mehrere Halbleiterlichtquellen 22 aufweisen, die eine andere Diodenklasse aufweisen, die neue Halbleiterlichtquelle in der Regel einmalig und kurzzeitig mit suboptimalan Parametern betrieben, bis das Steuergerät 38 die reale Diodenklasse ermittelt und den vorab gespeicherten Startwert damit ersetzt hat.

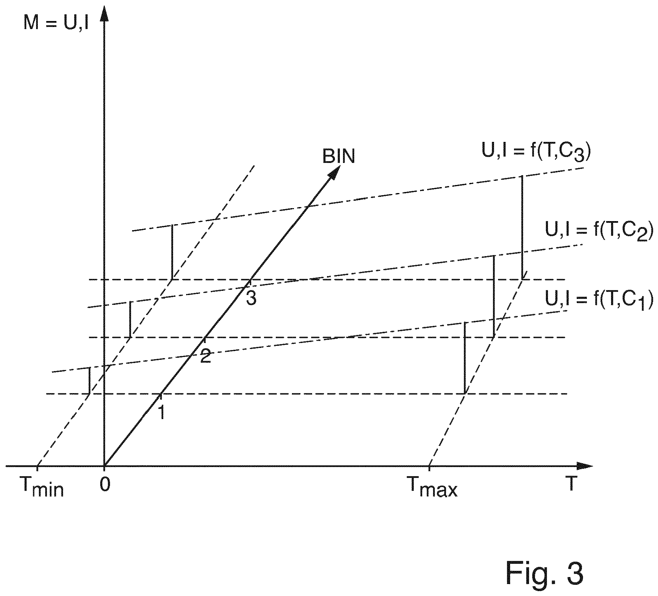

Die Figur 3 veranschaulicht schematisch in einem dreidimensionalen Koordinatensystem einen möglichen Zusammenhang zwischen dem Ausgangssignal M der Auswerteschaltung 20 und den Parametern, die für den korrekten Betrieb der Halbleiterlichtquellen 22 maßgeblich sind. Dies ist zum einen die Diodenklasse der Halbleiterlichtquelle 22 und zum anderen die Temperatur in unmittelbarer Umgebung der Halbleiterlichtquelle 22. Die Temperatur ist auf der Abszisse aufgetragen. Das Ausgangssignal der Auswerteschaltung 20 ist auf der Ordinate aufgetragen. Die Diodenklassen (BIN) sind auf der in die Zeichnungsebene hineinweisenden Achse aufgetragen. Die Einteilung der Halbleiterlichtquellen in Klassen erfolgt im Wesentlichen anhand ihrer Schwellenspannung, der Lichtausbeute sowie der Farbtemperatur bei Nennstrom. Bei der Halbleiterlichtquellenklasse, auch Bin genannt, handelt es sich folglich um diskrete Werte welche die Betriebsparameter der LED widergeben. Die detaillierte Aufschlüsselung der Diodenklassen kann aus den Datenblättern der Diodenhersteller entnommen werden.

Die Figur 3 beschränkt sich auf eine Einteilung in drei Klassen, die auf der Bin-Achse mit den Werten 1, 2, 3 bezeichnet sind. Die Halbleiterlichtquellen 22 werden in einem Temperaturbereich von Tₘᵢₙ bis Tₘₐₓ betrieben. Diesem Temperaturbereich wird abhängig von der Diodenklasse ein Bereich zugeordnet in dem das Ausgangssignal der Auswerteschaltung 20, Strom oder Spannung liegt. Die Auswerteschaltung ist dazu eingerichtet bei Tₘᵢₙ ein Ausgangssignal zu erzeugen, das einem für die entsprechende Diodenklasse festgelegten Minimalwert und bei Tₘₐₓ einem entsprechend festgelegten Maximalwert entspricht. Zwischen diesen Extrempunkten folgt das Ausgangssignal einer bekannten mathematischen Funktion. Im dargestellten Diagramm steigt das Ausgangssignal mit zunehmender Temperatur linear an. Die Minimalwerte und die Maximalwerte des Ausgangssignals sind für jede Diodenklasse so festgelegt, dass sich die Ausgangssignalbereiche für die einzelnen Diodenklassen nicht überschneiden. Somit sind jedem Wert des Ausgangssignals der Auswerteschaltung 20 eindeutig eine Klasse und eine Temperatur zugeordnet.

Nachfolgend sind Diodenklassen, Maximal- und Minimaltemperaturen und Ausgangsströme oder Ausgangsspannungen für eine Ausgestaltung der Auswerteschaltung in einer Tabelle dargestellt. Die Werte sind nur beispielhaft.

| Bin | Temperatur [°C] | Ausgangstrom [mA] | Ausgangspannung [mV] |
|---|---|---|---|
| 1 | -40 | 1 | 200 |
| 1 | 105 | 2 | 400 |
| 2 | -40 | 3 | 500 |
| 2 | 105 | 4 | 700 |
| 3 | -40 | 5 | 800 |
| 3 | 105 | 6 | 1000 |
| . | | | |

Da jedem individuellen Ausgangssignalwert (Ausgangsstrom I oder Ausgangsspannung U) zwei Informationen eindeutig zugeordnet sind, kann dieses eine Ausgangssignal mittels einer Leitung an das Steuergerät 28 übermittelt werden. Die Werte Bin = 2 und Temperatur = - 40 °C ergeben (hier) zum Beispiel einen Ausgangsstrom von 3 mA. Das Steuergerät kann aus dem übermittelten Signal M = 3 mA ein-eindeutig die Werte Bin = 2 und Temperatur = - 40 °C ermitteln, zum Beispiel durch einen Zugriff auf im Steuergerät hinterlegte Zusammenhänge. Dadurch reduziert sich gegenüber dem Stand der Technik die Anzahl der zur Übermittlung dieser Informationen vom Lichterzeuger 18 zum Steuergerät 38 benötigten Leitungen. Infolge dessen reduziert sich auch die Anzahl der Eingänge 36 am Steuergerät 28. Durch die reduzierte Anzahl an Leitungen und Anschlüssen wird der Lichterzeuger 18 und das Steuergerät 28 kostengünstiger. Außerdem sinkt mit der Anzahl an Leitungen und Anschlüssen auch die Wahrscheinlichkeit für Fehler bei der Übertragung wodurch die Zuverlässigkeit der Beleuchtungseinrichtung zunimmt.

## Patentansprüche

1. Kraftfahrzeugbeleuchtungssystem (10) mit Elementen zur Lichterzeugung (18) und einem Steuergerät (38), wobei die Elemente zur Lichterzeugung (18) eine Halbleiterlichtquelle (22) aufweisen, die auf einem Trägerelement (16) angeordnet ist, und wobei das Steuergerät (38) dazu eingerichtet ist, einen Betriebsstrom der mindestens einen Halbleiterlichtquelle (22) einzustellen, wobei die Elemente zur Lichterzeugung (18) eine Auswerteschaltung (20) aufweisen, die auf dem Trägerelement (16) angeordnet und dazu eingerichtet ist, eine Klasse der Halbleiterlichtquelle (22) und eine Temperatur zu erfassen, wobei die Auswerteschaltung (20) dazu eingerichtet ist, in Abhängigkeit von der erfassten Temperatur in der unmittelbaren Umgebung der Halbleiterlichtquelle (22) ein Ausgangssignal zu erzeugen, das die erfasste Klasse und die erfasste Temperatur abbildet, **dadurch gekennzeichnet, dass** jedem Wertepaar aus erfasster Klasse und erfasster Temperatur in der Auswerteschaltung (20) genau ein Wert des Ausgangssignals (M) ein-eindeutig zugeordnet ist, dass die Auswerteschaltung (20) dazu eingerichtet ist, dieses Ausgangssignal (M) an einem Ausgang (32) der Auswerteschaltung bereitzustellen, der mit einem Eingang (36) des Steuergeräts (38) über eine Leitung verbunden ist, und dass das Steuergerät (38) dazu eingerichtet ist, durch einen Zugriff auf im Steuergerät (38) hinterlegte Zusammenhänge aus dem übermittelten Ausgangssignal (M) die Klasse und die Temperatur zu ermitteln und zu dem Wert des Ausgangssignals (M) einen für die ermittelte Klasse und die ermittelte Temperatur passenden Sollwert des Betriebsstroms zu bestimmen und den Istwert des Betriebsstromes basierend auf dem Sollwert einzustellen.

2. Kraftfahrzeugbeleuchtungssystem (10) nach Anspruch 1, wobei die Auswerteschaltung (20) mit einem elektrischen Festwiderstand (28) bestückt ist, der die Klasse der Halbleiterlichtquelle (22) repräsentiert.

3. Kraftfahrzeugbeleuchtungssystem (10) nach Anspruch 1 oder 2, wobei die Auswerteschaltung (20) mit einem Temperatur-abhängigen elektrischen Widerstand (26) bestückt ist.

4. Kraftfahrzeugbeleuchtungssystem (10) nach einem der vorangehenden Ansprüche, wobei die Auswerteschaltung (20) parallel zu der mindestens einen Halbleiterlichtquelle (22) über eine Leistungsversorgung (34) der Halbleiterlichtquelle (22) mit elektrischer Energie versorgt wird.

5. Kraftfahrzeugbeleuchtungssystem (10) nach einem der vorangehenden Ansprüche, wobei die Halbleiterlichtquelle (22) mehrere in Reihe geschaltete Leuchtdioden oder Laserdioden (22; 22.1, 22.2) aufweist.

6. Kraftfahrzeugbeleuchtungssystem (10) nach einem der vorangehenden Ansprüche, wobei die Auswerteschaltung (20) bei gedimmten Elementen zur Lichterzeugung (18) betreibbar ist.

7. Kraftfahrzeugbeleuchtungssystem (10) nach einem der vorangehenden Ansprüche, wobei die Auswerteschaltung (20) dazu eingerichtet ist, das Ausgangssignal (M) als digitales Ausgangssignal zu erzeugen.

8. Kraftfahrzeugbeleuchtungssystem (10) nach einem der vorangehenden Ansprüche, wobei das Steuergerät (38) dazu eingerichtet ist, Startparameter für den Betriebsstrom für die Elemente zur Lichterzeugung (18) zu speichern, mit denen diese in Betrieb genommen wird.

9. Kraftfahrzeugbeleuchtungssystem (10) nach Anspruch 8 wobei das Steuergerät (38) dazu eingerichtet ist, diese Startparameter zu überschreiben.

10. Kraftfahrzeugbeleuchtungssystem (10) nach einem der vorhergehenden Ansprüche, wobei die Auswerteschaltung an denselben Energieversorgungszweig (34) angeschlossen ist wie die Halbleiterlichtquelle (22), wobei der Energieversorgungszweig (34) einen zur Steuerung des Betriebsstroms durch die Halbleiterlichtquelle dienenden Schalter (27) aufweist, der zwischen einem Anschluss der Halbleiterlichtquelle und einem Anschluss der Auswerteschaltung liegt, so dass die Auswerteschhaltung auch bei ausgeschalteter Halbleiterlichtquelle über den Energieversorgungszweig (34) mit elektrischer Energie versorgbar ist.

## Claims

1. Motor vehicle illumination system (10) comprising elements for generating light (18) and a control unit (38), the elements for generating light (18) having a semiconductor light source (22) which is arranged on a carrier element (16), and the control unit (38) being designed to set an operating current of the at least one semiconductor light source (22), the elements for generating light (18) having an evaluation circuit (20) which is arranged on the carrier element (16) and is designed to detect a class of the semiconductor light source (22) and a temperature, the evaluation circuit (20) being designed to generate an output signal depending on the detected temperature in the immediate vicinity of the semiconductor light source (22), which output signal represents the detected class and the detected temperature, **characterized in that** exactly one value of the output signal (M) is uniquely assigned to each value pair of the detected class and the detected temperature in the evaluation circuit (20), that the evaluation circuit (20) is designed to provide this output signal (M) at an output (32) of the evaluation circuit, which output is connected to an input (36) of the control unit (38) via a line, and **in that** the control unit (38) is designed to determine the class and the temperature from the transmitted output signal (M) by accessing relationships stored in the control unit (38), and to determine a setpoint value of the operating current for the value of the output signal (M), which setpoint value matches the determined class and the determined temperature, and to adjust the actual value of the operating current based on the setpoint value.

2. Motor vehicle illumination system (10) according to claim 1, wherein the evaluation circuit (20) is equipped with an electrical fixed resistor (28) which represents the class of the semiconductor light source (22) .

3. Motor vehicle illumination system (10) according to claim 1 or claim 2, wherein the evaluation circuit (20) is equipped with a temperature-dependent electrical resistor (26).

4. Motor vehicle illumination system (10) according to any of the preceding claims, wherein the evaluation circuit (20) is supplied with electrical energy in parallel with the at least one semiconductor light source (22) via a power supply (34) of the semiconductor light source (22).

5. Motor vehicle illumination system (10) according to any of the preceding claims, wherein the semiconductor light source (22) has a plurality of light emitting diodes or laser diodes (22; 22.1, 22.2) connected in series.

6. Motor vehicle illumination system (10) according to any of the preceding claims, wherein the evaluation circuit (20) can be operated when the elements for generating light (18) are dimmed.

7. Motor vehicle illumination system (10) according to any of the preceding claims, wherein the evaluation circuit (20) is designed to generate the output signal (M) as a digital output signal.

8. Motor vehicle illumination system (10) according to any of the preceding claims, wherein the control unit (38) is designed to store start parameters for the operating current for the elements for generating light (18), by means of which start parameters these elements are put into operation.

9. Motor vehicle illumination system (10) according to claim 8, wherein the control unit (38) is designed to overwrite these start parameters.

10. Motor vehicle illumination system (10) according to any of the preceding claims, wherein the evaluation circuit is connected to the same power supply branch (34) as the semiconductor light source (22), wherein the power supply branch (34) has a switch (27) which is used to control the operating current through the semiconductor light source, which switch lies between a connection of the semiconductor light source and a connection of the evaluation circuit, such that the evaluation circuit can be supplied with electrical energy via the energy supply branch (34) even when the semiconductor light source is switched off.

## Revendications

1. Système d'éclairage de véhicule automobile (10) comprenant des éléments de production de lumière (18) et un dispositif de commande (38), les éléments de production de lumière (18) comprenant une source de lumière à semi-conducteur (22) qui est agencée sur un élément de support (16), et le dispositif de commande (38) étant conçu pour ajuster un courant de fonctionnement de ladite au moins une source de lumière à semi-conducteur (22), les éléments de production de lumière (18) comprenant un circuit d'évaluation (20) qui est agencé sur l'élément de support (16) et conçu pour détecter une classe de la source de lumière à semi-conducteur (22) et une température, le circuit d'évaluation (20) étant conçu pour produire un signal de sortie en fonction de la température détectée dans l'environnement immédiat de la source de lumière à semi-conducteur (22), qui reproduit la classe détectée et la température détectée, **caractérisé en ce qu'**à chaque paire de valeurs de la classe détectée et de la température détectée dans le circuit d'évaluation (20) est précisément associée de manière univoque une valeur du signal de sortie (M), **en ce que** le circuit d'évaluation (20) est conçu pour fournir ce signal de sortie (M) à une sortie (32) du circuit d'évaluation, qui est reliée à une entrée (36) du dispositif de commande (38) par l'intermédiaire d'un câble électrique, et **en ce que** le dispositif de commande (38) est conçu pour identifier la classe et la température à partir du signal de sortie (M) transmis par un accès à des relations enregistrées dans le dispositif de commande (38) et pour déterminer une valeur de consigne du courant de fonctionnement adaptée à la classe identifiée et à la température identifiée par rapport à la valeur du signal de sortie (M) et pour ajuster la valeur réelle du courant de fonctionnement sur la base de la valeur de consigne.

2. Système d'éclairage de véhicule automobile (10) selon la revendication 1, le circuit d'évaluation (20) étant équipé d'une résistance électrique fixe (28) qui représente la classe de la source de lumière à semi-conducteur (22).

3. Système d'éclairage de véhicule automobile (10) selon la revendication 1 ou 2, le circuit d'évaluation (20) étant équipé d'une résistance électrique (26) dépendant de la température.

4. Système d'éclairage de véhicule automobile (10) selon l'une quelconque des revendications précédentes, le circuit d'évaluation (20) étant alimenté en énergie électrique en parallèle à ladite au moins une source de lumière à semi-conducteur (22) par l'intermédiaire d'une alimentation électrique (34) de la source de lumière à semi-conducteur (22).

5. Système d'éclairage de véhicule automobile (10) selon l'une quelconque des revendications précédentes, la source de lumière à semi-conducteur (22) comprenant une pluralité de diodes électroluminescentes ou de diodes laser (22; 22.1, 22.2) connectées en série.

6. Système d'éclairage de véhicule automobile (10) selon l'une quelconque des revendications précédentes, le circuit d'évaluation (20) pouvant fonctionner avec des éléments de production de lumière (18) atténués.

7. Système d'éclairage de véhicule automobile (10) selon l'une quelconque des revendications précédentes, le circuit d'évaluation (20) étant conçu pour produire le signal de sortie (M) sous la forme d'un signal de sortie numérique.

8. Système d'éclairage de véhicule automobile (10) selon l'une quelconque des revendications précédentes, le dispositif de commande (38) étant conçu pour enregistrer des paramètres de démarrage pour le courant de fonctionnement pour les éléments de production de lumière (18) avec lesquels il est mis en service.

9. Système d'éclairage de véhicule automobile (10) selon la revendication 8, l'appareil de commande (38) étant conçu pour écraser ces paramètres de démarrage.

10. Système d'éclairage de véhicule automobile (10) selon l'une quelconque des revendications précédentes, le circuit d'évaluation étant raccordé à la même branche d'alimentation en énergie (34) que la source de lumière à semi-conducteur (22), la branche d'alimentation en énergie (34) comprenant un commutateur (27) servant à commander le courant de fonctionnement à travers la source de lumière à semi-conducteur, qui se trouve entre un raccord de la source de lumière à semi-conducteur et un raccord du circuit d'évaluation, de sorte que le circuit d'évaluation puisse être alimenté en énergie électrique par l'intermédiaire de la branche d'alimentation en énergie (34) même lorsque la source de lumière à semi-conducteur est éteinte.
